Europäisches Patentamt

European Patent Office

Office européen des brevets

(19)

(11) Veröffentlichungsnummer: **0 115 797**
**B1**

(12)

# EUROPÄISCHE PATENTSCHRIFT

(45) Veröffentlichungstag der Patentschrift:
23.04.86

(21) Anmeldenummer: 84100462.5

(22) Anmeldetag: 17.01.84

(51) Int. Cl.⁴: **H 02 H 7/00**, H 01 F 7/22

(54) Schutzeinrichtung für eine supraleitende Magnetspulenanordnung.

(30) Priorität: 02.02.83 DE 3303449

(43) Veröffentlichungstag der Anmeldung:
15.08.84 Patentblatt 84/33

(45) Bekanntmachung des Hinweises auf die Patenterteilung:
23.04.86 Patentblatt 86/17

(84) Benannte Vertragsstaaten:
DE FR GB

(56) Entgegenhaltungen:
DE - A - 2 301 152
FR - A - 2 112 054
GB - A - 1 138 271
GB - A - 1 179 740
GB - A - 1 463 292

NUCLEAR INSTRUMENTS & METHODS, Band 150, Nr. 3, April 1978, Seiten 377-385, North-Holland Publishing Co. D. COFFEY: "The 11.7 T solenoid of the hyperon bubble chamber"
INSTR. & EXPERIMENTAL TECHNIQUES, Band 22, Nr. 5, Teil 2, September/Oktober 1979, Seiten 1404-1407, Plenum Publishing Corporation, New York, US D. KABAT u.a.: "Device for protecting superconducting magnets with a superconducting connector"
IEEE TRANSACTIONS ON MAGNETICS, Band MAG-15,

(73) Patentinhaber: Siemens Aktiengesellschaft, Berlin und München Wittelsbacherplatz 2, D-8000 München 2 (DE)

(72) Erfinder: Ries, Günter, Dr., Schobertweg 2, D-8520 Erlangen (DE)

(56) Entgegenhaltungen: (Fortsetzung)
Nr. 1, Januar 1979, Seiten 126-127, IEEE, New York, US B. COX u.a.: "Design, fabrication and performance of low current superconducting beam line dipole"

## Beschreibung

Die Erfindung bezieht sich auf eine Einrichtung zum Schutz einer von einem flüssigen Kühlmittel tiefzukühlenden supraleitenden Magnetspulenanordnung bei einem unbeabsichtigten Übergang vom supraleitenden in den normalleitenden Zustand, wobei die Magnetspulenanordnung in mehrere hintereinandergeschaltete Teilwicklungen unterteilt ist, denen jeweils ein Schutzwiderstand vorbestimmten ohmschen Wertes so parallelgeschaltet ist, dass die einander zugewandten Enden benachbarter Teilwicklungen an die entsprechenden Enden ihrer zugehörenden Schutzwiderstände über ein gemeinsames Stück einer elektrischen Leitung angeschlossen sind. Eine entsprechende Schutzeinrichtung für eine supraleitende Magnetspulenanordnung ist aus der DE-A-23 01 152 bekannt.

Supraleitende Magnetspulen wie z.B. die der bekannten Spulenanordnung lassen sich vielfach auch kurzgeschlossen betreiben. Ist nämlich das magnetische Feld einer solchen Spule einmal aufgebaut, braucht zur Aufrechterhaltung dieses Feldes von aussen praktisch keine weitere elektrische Energie mehr zugeführt zu werden. Zur Speicherung der in die Spule eingespeisten elektrischen Energie kann man deshalb deren Wicklung an ihren Enden mittels eines möglichst widerstandsarmen Dauerstromschalters kurzschliessen (vgl. DE-A-25 21 328, DE-O-23 24 371). Der Strom fliesst dann fast ungedämpft in dem so ausgebildeten, kurzgeschlossenen Stromkreis, und alle elektrisch leitenden, zwischen dem Bereich der Tiefsttemperatur der Spule und der äusseren Raumtemperatur verlaufenden Verbindungen wie die Anschlussleitungen der zur Erregung der Magnetspule erforderlichen Stromversorgung können dann abgekoppelt werden, um so die Wärmeeinströmung in den Tiefsttemperaturbereich der Spule zu vermindern.

In grösseren supraleitenden Magnetspulen können erhebliche Energiemengen, beispielsweise im MJ-Bereich, gespeichert sein. Insbesondere diese Magnetspulen sind bei einem unbeabsichtigten Übergang vom supraleitenden Betriebszustand in den normalleitenden Zustand stark gefährdet, selbst wenn dieser auch als Quench bezeichnete Übergang zunächst nur in einem Teil der Spule auftritt. Infolge der geringen Wärmekapazität der supraleitenden Spulenleiter nimmt nämlich der Leiter nach dem Übergang vom supraleitenden in den normalleitenden Zustand durch die dadurch bedingte Widerstandserhöhung sehr schnell eine hohe Temperatur an. Gleichzeitig steigt auch sein spezifischer Widerstand sehr rasch an, wodurch die Erwärmung noch beschleunigt wird. Es kommt dabei zu Überspannungen, welche die Isolation beanspruchen und ungleichmässige Erwärmungen erzeugen können.

Um grössere supraleitende Magnetspulen vor einer Beschädigung oder Zerstörung durch Überhitzung bzw. durch elektrische Überschläge zu schützen, sind besondere Massnahmen erforderlich. Diese Massnahmen bestehen z.B. darin, dass man die Magnetspule in mehrere Teilwicklungen unterteilt, die zur Spannungsbegrenzung jeweils mit ohmschen Schutzwiderständen (vgl. DE-A-23 01 152), Halbleiterdioden (vgl. DE-A-16 14 964) oder Überspannungsableitern (vgl. DE-A-17 64 369) überbrückt sind.

Ausserdem ist es bekannt, zwecks Temperaturbegrenzung in der supraleitenden Magnetspule die Ausbreitung der normalleitenden Bereiche zu beschleunigen. Dies kann durch einen Stromstoss durch die Spulenwicklung oder durch einen gemeinsamen Wickelkörper aus z.B. Aluminium erfolgen, welcher sich durch Wirbelströme erwärmt und neue normalleitende Bereiche in der Magnetspule erzeugt (vgl. „IEEE Transactions on Magnetics", Vol. MAG-15, Nr. 1, Januar 1979, Seiten 855 bis 859). Darüber hinaus kann man auch die Quenchausbreitung durch elektrische Heizelemente an den Wicklungen fördern, die von einem besonderen Quenchdetektor aktiviert und von einer externen Stromversorgung gespeist werden (vgl. „IEEE-Transactions on Magnetics", Vol. MAG-17, Nr. 5, September 1981, Seiten 1815 bis 1822).

Aus Gründen der Zuverlässigkeit ist vielfach jedoch eine passive Schutzeinrichtung für eine solche Magnetspule wünschenswert, die ihre spannungs- und temperaturbegrenzende Funktion ohne die Betätigung aktiver Elemente wie z.B. von Quenchdetektoren, Schaltern und extern gespeisten Heizern ausübt.

Die bei der Schutzeinrichtung gemäss der eingangs genannten DE-A-23 01 152 vorgesehenen parallelen Schutzwiderstände zu den Teilwicklungen der supraleitenden Magnetspule sind als eine solche passive Schutzeinrichtung anzusehen. Die Schutzwirkung dieser Widerstände, nämlich einen Parallelpfad zu der gequenchten und deshalb hochohmigen Wicklung für den in den übrigen Wicklungen fliessenden Strom zu bilden, stellt die Frage nach der thermischen Belastbarkeit dieser Widerstände.

Bei grösseren Magnetspulen könnte als Folge eines Quenches in einem solchen Widerstand eine Leistung von bis zu 100 kW und mehr umzusetzen sein. Breitet sich der Quench nicht auf die weiteren Teilwicklungen aus, so würde die gesamte gespeicherte Energie der Magnetspule in diesem Schutzwiderstand in Wärme umgesetzt, d.h. der Hauptteil der Energie müsste vom Widerstand durch Temperaturerhöhung seiner Masse aufgenommen werden. Zur Begrenzung der Erwärmung auf eine vorbestimmte Höchsttemperatur von beispielsweise einigen 100 K müsste dann die Masse eines jeden Widerstandes verhältnismässig hoch sein, beispielsweise mehrere -zig Kilogramm betragen. Schutzwiderstände solch grosser Masse sind vielfach jedoch unerwünscht.

Aufgabe der vorliegenden Erfindung ist es deshalb, die eingangs genannte, passive Schutzeinrichtung dahingehend auszugestalten, dass Schutzwiderstände mit verhältnismässig kleiner Masse vorgesehen werden können.

Diese Aufgabe wird erfindungsgemäss mit den im Kennzeichen des Hauptanspruchs angegebenen Massnahmen gelöst.

Die Teilwicklungen des supraleitenden Magneten werden somit durch Schutzwiderstände überbrückt, welche sich im Abgasstrom des die supraleitende Magnetspulenanordnung kühlenden kryogenen Mediums befinden. Die mit der erfindungsgemässen Ausgestaltung der Schutzeinrichtung verbundenen Vorteile bestehen dann darin, dass die Wärmekapazität und damit die Masse dieser Widerstände verhältnismässig klein zu halten ist, indem die Entladung bei einem Quench durch Fortpflanzung dieses Übergangs mittels der Heizelemente auf die gesamte Spulenanordnung beschleunigt wird. Die gespeicherte Energie wird folglich vorwiegend und gleichmässig in allen Spulenwicklungen in Wärme umgesetzt. Da die Heizelemente von internen Spannungen gespeist werden, welche bei einem Quench einer Teilwicklung infolge Stromumverteilung als Spannungsabfall an den Zusatzwiderständen zu den Schutzwiderständen entstehen, ist die Schutzeinrichtung somit passiv und benötigt keinerlei elektrische Verbindungen nach aussen. Die Kühlmittelverluste aufgrund von Wärmeeinleitung sind dementsprechend gering.

Besonders vorteilhaft ist es, wenn die hintereinandergeschalteten Teilwicklungen der Magnetspulenanordnung mittels eines supraleitenden Dauerstromschalters kurzzuschliessen sind. Dieser Dauerstromschalter kann insbesondere durch mindestens ein gekühltes Schutzglied im Betriebszustand elektrisch überbrückt sein, das im Fall des Normalleitend-Werdens des Dauerstromschalters zumindest den grösseren Teil des Betriebsstromes übernimmt.

Zusätzliche vorteilhafte Ausgestaltungen der Schutzeinrichtung nach der Erfindung gehen aus den übrigen Unteransprüchen hervor.

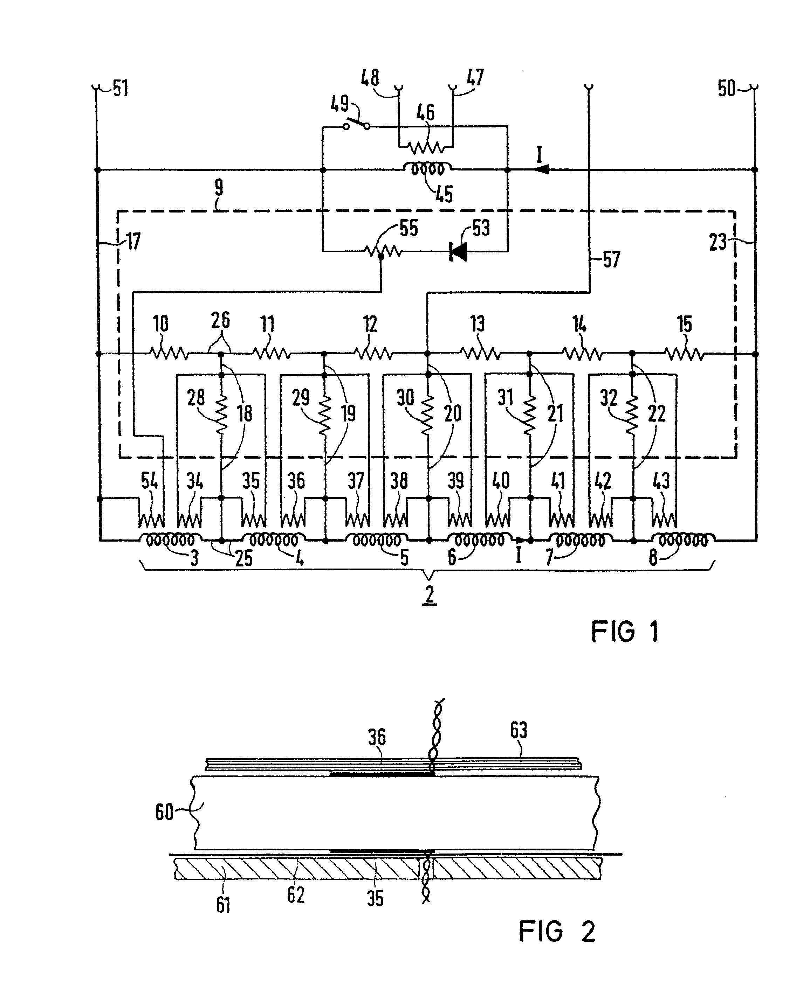

Zur weiteren Erläuterung der Erfindung und deren in den Unteransprüchen gekennzeichneten Ausgestaltungen wird auf die Zeichnung Bezug genommen, in deren Fig. 1 die Schaltung einer erfindungsgemässen Schutzeinrichtung für eine supraleitende Magnetspulenanordnung wiedergegeben ist. Fig. 2 zeigt eine Anordnungsmöglichkeit für die Heizelemente dieser Schutzeinrichtung an den jeweiligen Teilwicklungen.

Der in Fig. 1 gezeigten Schaltung ist als Ausführungsbeispiel eine supraleitende Magnetspulenanordnung 2 zugrundegelegt, die sechs in Serie liegende Teilwicklungen bzw. Teilspulen 3 bis 8 umfasst. Bis auf die sich in der durch eine gestrichelte Linie umrissenen Zone 9 befindlichen Bauteile sollen sich alle in der Schaltung angedeuteten Teile im Bereich des als Kühlmittel zur Kühlung der supraleitenden Magnetspulenanordnung 2 vorgesehenen flüssigen Heliums befinden. Hierzu sind diese Teile insbesondere in einem Bad des flüssigen Heliums innerhalb eines entsprechenden Kryostaten angeordnet.

Wegen der verhältnismässig hohen Induktivität der Spulenanordnung bis zu 100 H und höher und einer aus isolationstechnischen Gründen zu fordernden Begrenzung der Spannungen innerhalb der Teilspulen auf z.B. 500 V ist eine schnelle Energieauskopplung aus der Spulenanordnung in einen externen Widerstand nicht möglich. Ebenso entfällt eine transformatorische Auskopplung mittels einer Sekundärwicklung, da diese kaum mit der zu fordernden grossen Zeitkonstanten herzustellen ist. Die gespeicherte Energie muss deshalb in Wärme umgesetzt werden. Hierzu ist jede der sechs Teilspulen 3 bis 8 mit einem ohmschen Schutzwiderstand 10 bis 15 mit einem beispielsweise gleich hohen ohmschen Wert zwischen 0,2 und 2 $\Omega$ überbrückt (vgl. „The Review of Scientific Instruments", Vol. 34, Nr. 4, April 1963, Seiten 368 bis 373). Diese Schutzwiderstände 10 bis 15 sind wie die zugehörenden Teilspulen 3 bis 8 zu einer Kette hintereinandergeschaltet. Durch Querverbindungen (Leitungen 17 bis 23) zwischen der Kette der Schutzwiderstände und der Kette der Teilspulen wird die Parallelschaltung der Schutzwiderstände zu den jeweiligen Teilwicklungen erreicht. Hierbei sind die einander zugewandten Enden benachbarter Teilspulen an die entsprechenden Enden ihrer zugeordneten Schutzwiderstände jeweils über eine gemeinsame Leitung 18 bis 22 angeschlossen. So führt z.B. von der Verbindung 25 zwischen den beiden Teilspulen 3 und 4 zu der Verbindung 26 zwischen den beiden zugeordneten Schutzwiderständen 10 und 11 die gemeinsame Leitung 18. Entsprechend sind die übrigen Leitungen 19 bis 22 angeordnet.

Um die Verlustleistung in den sechs Schutzwiderständen 10 bis 15 beim Auf- und Aberregen der Magnetspulenanordnung 2 zu begrenzen und dabei das Verdampfen grösserer Mengen des die Teilspulen 3 bis 8 kühlenden flüssigen Heliums zu vermeiden, sind die Schutzwiderstände von dem flüssigen Helium thermisch entkoppelt, indem sie im Abgasstrom dieses Kühlmittels angeordnet sind. Auf diese Weise wird die Enthalpie des Heliumgases ausgenutzt, ohne dass damit ein wesentlicher Mehrverbrauch an flüssigem Helium verbunden ist. Der Bereich des Helium-Abgasstromes ist in der Schaltung durch die gestrichelte Linie (Zone 9) angedeutet.

Ausserdem soll auch die thermische Belastung der Schutzwiderstände 8 bis 15 bei einem Quench dadurch begrenzt sein, dass sich der Quench mittels besonderer, an den einzelnen Teilspulen angebrachter Heizelemente auf die ganze Spulenanordnung ausbreitet. Dann fallen nämlich alle Spulenströme verhältnismässig schnell ab, und der grösste Teil der gespeicherten Energie wird weitgehend gleichmässig in dem Wickelvolumen, das den Hauptteil der kalten Masse darstellt, verzehrt, während nur ein kleiner Teil in den Schutzwiderständen umgesetzt wird. Die Schutzwiderstände können dann dementsprechend kleiner ausfallen.

Erfindungsgemäss ist hierzu ein passives System mit den Heizelementen vorgesehen, indem die Speisespannungen für die Heizelemente von niederohmigen Zusatzwiderständen zwischen der Teilspulen- und der Schutzwiderstandskette abgegriffen werden. Dementsprechend liegt in den zu benachbarten Teilwicklungen gemeinsamen Leitungen 18 bis 22 jeweils ein Zusatzwiderstand 28 bis 32, dessen ohmscher Wert vorteilhaft mindestens 5mal kleiner als der Wert jedes der angeschlossenen Schutzwiderstände ist. Diese Zusatzwiderstände stellen zugleich weitere Schutzwiderstände für die Teilspulen 3 bis 8 dar und sind wie die Schutzwiderstände 10 bis 15 im Helium-Abgasstrom angeordnet. Zu jedem dieser Zusatzwiderstände 28 bis 32 sind zwei elektrische Heizelemente parallelgeschaltet. Diese Heizelemente, die gemäss dem gewählten Ausführungsbeispiel jeweils einen wesentlich grösseren, z.B. mindestens 10mal grösseren ohmschen Wert als ihr zugeordneter Zusatzwiderstand haben können, stehen jeweils mit den beiden benachbarten Teilwicklungen in thermischem Kontakt, welche mit dem jeweiligen Zusatzwiderstand verbunden sind. So werden beispielsweise an dem Zusatzwiderstand 28, der in der für die beiden Teilspulen 3 und 4 gemeinsamen Leitung 18 liegt, die Speisespannungen für zwei Heizelemente 34 und 35 abgegriffen, die an der Teilspule 3 bzw. der Teilspule 4 in thermischem Kontakt angeordnet sind. In entsprechender Weise werden Heizelemente 36 bis 43 von an den Zusatzwiderständen 29 bis 32 abgegriffenen Spannungen gespeist. Fällt nun der Strom in einer der Teilspulen 3 bis 8 infolge eines Quenches ab, so fliessen Ausgleichsströme über den ihr zuzuordnenden Zusatzwiderstand. Die an diesem Widerstand angeschlossenen Heizelemente von zwei Teilspulen pflanzen dann den Quench auf die jeweils benachbarte Teilspule fort.

Wie der Schaltung gemäss Fig. 1 ferner zu entnehmen ist, ist die Kette der Teilspulen 3 bis 8 über einen supraleitenden Dauerstromschalter 45 kurzgeschlossen. Bei diesem Schalter handelt es sich um einen Kurzschlussschalter, der mittels einer Heizwicklung 46 thermisch zwischen supraleitendem und normalleitendem Zustand zu schalten ist (vgl. z.B. DE-B-15 39 825). Diese Heizwicklung ist vorteilhaft nur während der Auf- und Aberregungsphasen der Magnetspulenanordnung an Klemmen 47 und 48 mit einer externen Stromversorgung verbunden. Gegebenenfalls können jedoch auch andere supraleitende Schaltertypen eingesetzt werden. Der Dauerstromschalter befindet sich ebenfalls in dem die Magnetspulenanordnung 2 kühlenden Bad an flüssigem Helium. Er trägt im ungestörten Betriebszustand den Nennstrom I, dessen Flussrichtung durch Pfeile an dem in der Figur durch stärkere Linien angedeuteten Kurzschlusskreis veranschaulicht ist. Auch für diesen Schalter müssen Schutzmassnahmen getroffen werden, um im Fall eines unbeabsichtigten Überganges in die Normalleitung eine Beschädigung auszuschliessen. Hierzu sind in der Schaltung zwei Schutzglieder angedeutet, mit denen der Dauerstromschalter 45 im Betriebszustand elektrisch überbrückt ist. Als erstes kann zu dem Dauerstromschalter 45 ein mechanischer Kurzschlussschalter 49 parallelgeschaltet werden. Dieser auch in dem Helium-Bad anzuordnende Kurzschlussschalter wird nach Erreichen des Nennstromes I, jedoch bei an Klemmen 50 und 51 noch angekoppelten Stromzuführungen geschlossen und schützt den supraleitenden Dauerstromschalter 45. An seinen Widerstand werden keine hohen Anforderungen gestellt. Er wird nur zum betriebsmässigen Auf- und Aberregen der Magnetspulenanordnung 2 geöffnet, wenn der Dauerstromschalter durch ein parallelliegendes Netzgerät oder einen externen Entladewiderstand geschützt ist.

Als zweite Möglichkeit kann der supraleitende Dauerstromschalter 45 auch durch einen Strompfad überbrückt sein, in dem sich mindestens eine kalte Diode 53 befindet (vgl. „IEEE Transactions on Nuclear Science", Vol. NS-24, Nr. 3, Juni 1977, Seiten 1318 und 1319). Diese kalte Diode wird in Durchlassrichtung betrieben, beim Auferregen jedoch in Sperrichtung. Ihre Durchlassspannung von ca. 1 V ist dabei für den Dauerstromschalter ungefährlich. Der wesentliche Vorteil einer solchen Diode ist darin zu sehen, dass sie bei Heliumtemperatur auch in Durchlassrichtung sperrt. Nur bei einem Schalterquench schaltet die Diode bei den dann höheren Spannungen infolge thermischer Rückkopplung innerhalb einiger Mikrosekunden durch und schützt so den Schalter. Um jedoch auszuschliessen, dass aufgrund der anliegenden Durchlassspannung von 1 bis 2 V der Dauerstromschalter nicht mehr vollständig supraleitend wird und so die gesamte magnetische Energie in der Diode umgesetzt würde, ist zusätzlich noch eine Quenchauslösung in der Magnetspulenanordnung 2 über ein weiteres Heizelement 54 vorgesehen. Entsprechend der Speisung der Heizelemente 34 bis 43 wird das beispielsweise an der Teilspule 3 angebrachte Heizelement 54 von der Spannung gespeist, die an einem kleinen Widerstand 55 in Serie zu der Diode 53 im Quenchfall des Dauerstromschalters 45 abfällt. Mit Hilfe dieses Heizelementes 54 wird dann zunächst die Teilspule 3 und werden anschliessend mit Hilfe der Zusatzwiderstände 28 bis 32 und der Heizelemente 35 bis 43 die übrigen Teilspulen 4 bis 8 in den normalleitenden Zustand überführt. Die Diode 53 und ihr in Serie liegender Widerstand 55 werden zweckmässigerweise ebenfalls im Helium-Abgasstrom angeordnet.

Wie aus Fig. 1 ferner hervorgeht, ist an der Kette der Schutzwiderstände 10 bis 15 eine elektrische Leitung 57 angeschlossen. Über diese Leitung ist nur bei einem während der Auf- oder Aberregungsphasen der Magnetspulenanordnung 2 angekoppelten externen Netzgerät bei geöffnetem mechanischen Kurzschlussschalter 49 ein Quenchdetektor mit der Magnetspulenanordnung verbunden. Dieser Detektor hat die Aufgabe, bei einem während dieser Phasen auftretenden Quench einer Teilspule oder der ganzen Spulenanordnung das externe Netzgerät abzuschalten. Hierbei muss jedoch gewährleistet sein, dass der äussere Stromkreis z.B. über eine Freilaufdiode des Netzgerätes oder über einen externen Entladewiderstand geschlossen bleibt.

Gemäss dem in Fig. 1 zugrunde gelegten Ausführungsbeispiel wurde davon ausgegangen, dass die Heizelemente 34 bis 43 und die zugehörenden Zusatzwiderstände 28 bis 32 jeweils aus voneinander getrennten Bauteilen bestehen. Gegebenenfalls ist es jedoch möglich, dass zumindest teilweise die Heizelemente zugleich auch als die entsprechenden Zusatzwiderstände vorgesehen werden, d.h., dass die Heizelemente auch die Funktion der Zusatzwiderstände übernehmen.

In Fig. 2 ist ein Teil eines Schnittes durch ein Wickelpaket 60 einer Teilspule der Magnetspulenanordnung 2, für die die Schutzeinrichtung gemäss Fig. 1 vorgesehen ist, schematisch veranschaulicht. Das Wickelpaket ist hierbei aus Gründen der Vereinfachung gerade dargestellt. Es ist auf einem Spulenkörper 61 aufgebracht, der von einer nicht heliumtransparenten Isolierung 62 umschlossen ist. Auf der Innen- und Aussenseite des Wickelpaketes ist je ein flächenhaftes Heizelement angebracht. Nimmt man beispielsweise an, dass das Wickelpaket 60 der Teilspule 4 gemäss Fig. 1 zuzuordnen ist, so handelt es sich bei diesen Heizelementen um die in Fig. 1 mit 35 und 36 bezeichneten Elemente. Diese Elemente sind zu unterschiedlichen Zusatzwiderständen 28, 29 bzw. zu einem Zusatzwiderstand 28 und dem Widerstand 55 zu der kalten Diode 53 parallelgeschaltet. Die Heizelemente sind in Form metallisierter Kunststoffolien unter die unterste Lage bzw. auf die oberste Lage des Wickelpaketes geklebt. Wesentlich ist dabei, dass die Zuleitungen jeweils an den Widerstand führen, der mit dem zugehörigen Wicklungsende verbunden ist. Somit werden Potentialdifferenzen zwischen der zugeordneten Teilspule und dem Heizelement auf die resistive Spannung einer Wicklungslage, d.h. auf wenige Volt begrenzt. Um das die Heizelemente 35 und 36 enthaltende Wickelpaket 60 ist eine Bandage 63 gelegt.

Gemäss einem konkreten Ausführungsbeispiel einer Schutzeinrichtung entsprechend Fig. 1 ist diese Einrichtung einer Magnetspulenanordnung 2 mit sechs Teilspulen 3 bis 8 zugeordnet. Mit diesen Spulen, deren gesamte Induktivität 83 H beträgt, wird ein Feld von 2 T erzeugt, wobei durch die Leiter der Spulen ein Nennstrom I von 382,5 A bei einer mittleren Stromdichte von etwa $99 \times 10^6$ A/m² fliesst. In der Spulenanordnung ist eine Energie von 6,1 MJ gespeichert. Die einzelnen Schutzwiderstände 10 bis 15 haben jeweils einen Wert von etwa 0,45 Ω, während die Zusatzwiderstände jeweils etwa 0,05 Ω und der Widerstand 55 zu der kalten Diode 53 etwa 0,1 Ω gross sind. Als Material für die Widerstände kann vorteilhaft Edelstahl vorgesehen sein. Die flächenhaften Heizelemente 34 bis 43 und 54 sind aus metallisierten Kunststoffolien erstellt (Fa. Minco Products Corp., Minneapolis, USA: Thermofoil) und haben jeweils einen Widerstand von etwa 2,5 Ω.

Mit einer solchen Schutzeinrichtung bleiben dann im Quenchfall die Einzelspannungen über einer Teilspule unter 140 V, wobei die Temperaturen 100 K nicht überschreiten.

## Patentansprüche

1. Einrichtung zum Schutz einer von einem flüssigen Kühlmittel tiefstzukühlenden supraleitenden Magnetspulenanordnung (2) bei einem unbeabsichtigten Übergang vom supraleitenden in den normalleitenden Zustand, wobei die Magnetspulenanordnung (2) in mehrere hintereinandergeschaltete Teilwicklungen (3 bis 8) unterteilt ist, denen jeweils ein Schutzwiderstand (10 bis 15) vorbestimmten ohmschen Wertes so parallelgeschaltet ist, dass die einander zugewandten Enden benachbarter Teilwicklungen (3 bis 8) an die entsprechenden Enden ihrer zugehörenden Schutzwiderstände (10 bis 15) über ein gemeinsames Stück einer elektrischen Leitung angeschlossen sind, dadurch gekennzeichnet, dass

a) die Schutzwiderstände (10 bis 15) im Abgasstrom (Zone 9) des Kühlmittels angeordnet sind,

b) in den zu benachbarten Teilwicklungen (3 bis 8) gemeinsamen Leitungsstücken (18 bis 22) jeweils ein Zusatzwiderstand (28 bis 32) liegt, dessen ohmscher Wert kleiner als der Wert jedes der an ihn angeschlossenen Schutzwiderstände (10 bis 15) ist, und

c) zu jedem Zusatzwiderstand (28 bis 32) zwei elektrische Heizelemente (34 bis 43) parallelgeschaltet sind, die in thermischem Kontakt mit den beiden benachbarten Teilwicklungen (3 bis 8) stehen, welche mit dem jeweiligen Zusatzwiderstand (28 bis 32) verbunden sind.

2. Schutzeinrichtung nach Anspruch 1, dadurch gekennzeichnet, dass die Zusatzwiderstände (28 bis 32) im Abgasstrom (Zone 9) des Kühlmittels angeordnet sind.

3. Schutzeinrichtung nach Anspruch 1 oder 2, dadurch gekennzeichnet, dass der ohmsche Wert jedes Zusatzwiderstandes (28 bis 32) mindestens 5mal kleiner ist als der Wert des an ihn angeschlossenen Schutzwiderstandes (10 bis 15).

4. Schutzeinrichtung nach einem der Ansprüche 1 bis 3, dadurch gekennzeichnet, dass der ohmsche Wert jedes Heizelementes (34 bis 43) grösser, vorzugsweise mindestens 10mal grösser ist als der Wert des jeweiligen Zusatzwiderstandes (28 bis 32).

5. Schutzeinrichtung nach einem der Ansprüche 1 bis 3, dadurch gekennzeichnet, dass die Zusatzwiderstände (28 bis 32) zumindest teilweise als die Heizelemente (34 bis 43) ausgebildet sind.

6. Schutzeinrichtung nach einem der Ansprüche 1 bis 5, dadurch gekennzeichnet, dass die hintereinandergeschalteten Teilwicklungen (3 bis 8) der Magnetspulenanordnung (2) mittels eines supraleitenden Dauerstromschalters (45) kurzzuschliessen sind.

7. Schutzeinrichtung nach Anspruch 6, dadurch gekennzeichnet, dass der supraleitende Dauerstromschalter (45) ein mittels einer Heizwicklung (46) zu betätigender Kurzschlussschalter ist.

8. Schutzeinrichtung nach Anspruch 6 oder 7, dadurch gekennzeichnet, dass der supraleitende Dauerstromschalter (45) mit dem flüssigen Kühlmittel der Magnetspulenanordnung (2) zu kühlen ist.

9. Schutzeinrichtung nach einem der Ansprüche 6 bis 8, dadurch gekennzeichnet, dass der supraleitende Dauerstromschalter (45) durch mindestens ein gekühltes Schutzglied (49; 53 und 55) im Betriebszustand elektrisch überbrückt ist, das im Fall des Normalleitend-Werdens des Dauerstromschalters (45) zumindest den grösseren Teil des Betriebsstromes (I) übernimmt.

10. Schutzeinrichtung nach Anspruch 9, dadurch gekennzeichnet, dass als gekühltes Schutzglied ein mechanischer Kurzschlussschalter (49) vorgesehen ist.

11. Schutzeinrichtung nach Anspruch 10, dadurch gekennzeichnet, dass der Kurzschlussschalter (49) mit dem flüssigen Kühlmittel der Magnetspulenanordnung (2) zu kühlen ist.

12. Schutzeinrichtung nach den Ansprüchen 9 und/oder 10, dadurch gekennzeichnet, dass als gekühltes Schutzglied mindestens eine Diode (53) vorgesehen ist.

13. Schutzeinrichtung nach Anspruch 12, dadurch gekennzeichnet, dass zu der Diode (53) mindestens ein ohmscher Widerstand (55) in Serie geschaltet ist, dem ein weiteres elektrisches Heizelement (54) mit grösserem ohmschen Wert an einer der Teilwicklungen (3 bis 8) der Magnetspulenanordnung (2) parallelgeschaltet ist.

14. Schutzeinrichtung nach Anspruch 13, dadurch gekennzeichnet, dass die Diode (53) und ihr Serienwiderstand (55) im Abgasstrom (Zone 9) des Kühlmittels angeordnet sind.

15. Schutzeinrichtung nach einem der Ansprüche 1 bis 14, dadurch gekennzeichnet, dass als Heizelemente (34 bis 43; 54) metallisierte Kunststoffolien vorgesehen sind.

## Claims

1. A protective device for a superconductive magnetic coil arrangement (2) which is to be deep frozen by a liquid coolant protecting in the event of an unintentional transition from the superconductive to the normally conductive state, where the magnetic coil arrangement (2) is divided into a plurality of series-connected sub-windings (3 to 8) each connected in parallel with a protective resistor (10 to 15) having a predetermined ohmic value in such manner that those ends of adjacent sub-windings (3 to 8) which face towards one another are connected to the corresponding ends of their associated protective resistors (10 to 15) via a common component of an electrical line, characterised in that

(a) the protective resistors (10 to 15) are arranged in the waste gas flow (zone 9) of the coolant,

(b) each of the line components (18 to 22) common to adjacent sub-windings (3 to 8) contains an additional resistor (28 to 32) whose ohmic value is smaller than the value of each of the protective resistors (10 to 15) to which it is connected, and

(c) each additional resistor (28 to 32) is connected in parallel with two electrical heating elements (34 to 43) which are in thermal contact with the two adjacent sub-windings (3 to 8) connected to the additional resistor (28 to 32) in question.

2. A protective device as claimed in Claim 1, characterised in that the additional resistors (28 to 32) are arranged in the waste gas flow (zone 9) of the coolant.

3. A protective device as claimed in Claim 1 or 2, characterised in that the ohmic value of each additional resistor (28 to 32) is at least five times smaller than the value of the protective resistor (10 to 15) to which it is connected.

4. A protective device as claimed in one of Claims 1 to 3, characterised in that the ohmic value of each heating element (34 to 43) is greater, preferably at least ten times greater, than the value of the associated additional resistor (28 to 32).

5. A protective device as claimed in one of Claims 1 to 3, characterised in that the additional resistors (28 to 32) are designed at least in part as heating elements (34 to 43).

6. A protective device as claimed in one of Claims 1 to 5, characterised in that the series-connected sub-windings (3 to 8) of the magnetic coil arrangement (2) are to be short-circuited by means of a superconductive persistent current switch (45).

7. A protective device as claimed in Claim 6, characterised in that the superconductive persistent current switch (45) is a short-circuiting switch to be operated by a heating winding (46).

8. A protective device as claimed in Claim 6 or 7, characterised in that the superconductive persistent current switch (45) is to be cooled by the liquid coolant of the magnetic coil arrangement (2).

9. A protective device as claimed in one of Claims 6 to 8, characterised in that the superconductive persistent current switch (45) is bridged electrically in the operating state by at least one cooled protective element (49; 53 and 55) which carries at least the major part of the operating current (I) in the event that the persistent current switch (45) becomes normally conductive.

10. A protective device as claimed in Claim 9, characterised in that a mechanical short-circuiting switch (49) is provided as a cooled protective element.

11. A protective device as claimed in Claim 10, characterised in that the short-circuiting switch (49) is to be cooled by the liquid coolant of the magnetic coil arrangement (2).

12. A protective device as claimed in Claim 9 and/or Claim 10, characterised in that at least one diode (53) is provided as a cooled protective element.

13. A protective device as claimed in Claim 12, characterised in that the diode (53) is connected in series with at least one resistor (55) connected in parallel with a further electrical heating element (54) having a higher ohmic value on one of the sub-windings (3 to 8) of the magnetic coil arrangement (2).

14. A protective device as claimed in Claim 13, characterised in that the diode (53) and its series resistor (55) are arranged in the waste gas flow (zone 9) of the coolant.

15. A protective device as claimed in one of Claims 1 to 14, characterised in that metallised synthetic foils are provided as heating elements (34 to 43; 54).

## Revendications

1. Dispositif pour la protection d'une structure de bobine d'électroaimant supraconductrice (2), à refroidir à très basse température par un fluide de refroidissement liquide, lors d'un passage intempestif de l'état supraconducteur à l'état conducteur normal, la structure de bobine d'électroaimant (2) étant divisée en plusieurs enroulements partiels (3 à 8) montés en série, avec chacun desquels est montée en parallèle une résistance protectrice (10 à 15) de valeur ohmique préfixée, de manière que les extrémités, dirigées l'une vers l'autre, d'enroulements partiels (3 à 8) voisins soient raccordées aux extrémités correspondantes de leurs résistances protectrices (10 à 15) respectives par un tronçon commun d'une ligne électrique, caractérisé en ce que

a) les résistances protectrices (10 à 15) sont disposées dans le courant de gaz d'échappement (zone 9) du fluide de refroidissement,

b) les tronçons de ligne (18 à 22) communs aux enroulements partiels (3 à 8) voisins contiennent chacun une résistance supplémentaire (28 à 32) dont la valeur ohmique est inférieure à la valeur de chacune des résistances protectrices (10 à 15) raccordées à lui, et

c) avec chaque résistance supplémentaire (28 à 32) sont montés en parallèle deux éléments électriques chauffants (34 à 43) qui sont en contact thermique avec les deux enroulements partiels (3 à 8) voisins, connectés à la résistance supplémentaire (28 à 32) correspondante.

2. Dispositif selon la revendication 1, caractérisé en ce que les résistances supplémentaires (28 à 32) sont disposées dans le courant de gaz d'échappement (zone 9) du fluide de refroidissement.

3. Dispositif selon l'une des revendications 1 ou 2, caractérisé en ce que la valeur ohmique de chaque résistance supplémentaire (28 à 32) est au moins 5 fois plus petite que la valeur de la résistance protectrice (10 à 15) qui lui est raccordée.

4. Dispositif selon l'une des revendications 1 à 3, caractérisé en ce que la valeur ohmique de chaque élément chauffant (34 à 43) est plus grande, de préférence au moins 10 fois plus grande, que la valeur de la résistance supplémentaire (28 à 32) correspondante.

5. Dispositif selon l'une des revendications 1 à 3, caractérisé en ce que les résistances supplémentaires (28 à 32) sont réalisées, au moins en partie, pour former les éléments chauffants (34 à 43).

6. Dispositif selon l'une des revendications 1 à 5, caractérisé en ce que les enroulements partiels (3 à 8) montés en série de la structure de bobine d'électroaimant (2) peuvent être court-circuités par un interrupteur à courant permanent (45) supraconducteur.

7. Dispositif selon la revendication 6, caractérisé en ce que l'interrupteur à courant permanent (45) supraconducteur est un interrupteur de court-circuitage pouvant être manœuvré au moyen d'un enroulement chauffant (46).

8. Dispositif selon l'une des revendications 6 ou 7, caractérisé en ce que l'interrupteur à courant permanent (45) supraconducteur est refroidissable par le fluide de refroidissement liquide de la structure de bobine d'électroaimant (2).

9. Dispositif selon l'une des revendications 6 à 8, caractérisé en ce que l'interrupteur à courant permanent (45) supraconducteur est shunté électriquement, en service, par au moins un organe de protection refroidi (49; 53 et 55) qui reprend au moins la majeure partie du courant de service (I) lorsque l'interrupteur à courant permanent (45) devient conducteur normal.

10. Dispositif selon la revendication 9, caractérisé en ce qu'un interrupteur de court-circuitage (49) est prévu comme organe de protection refroidi.

11. Dispositif selon la revendication 10, caractérisé en ce que l'interrupteur de court-circuitage (49) est refroidissable par le fluide de refroidissement de la structure de bobine d'électroaimant (2).

12. Dispositif selon les revendications 9 et/ou 10, caractérisé en ce qu'au moins une diode (53) est prévue comme organe de protection refroidi.

13. Dispositif selon la revendication 12, caractérisé en ce qu'au moins une résistance ohmique (55) est montée en série avec la diode (53) et qu'un autre élément électrique chauffant (54) de plus grande valeur ohmique, disposé sur un des enroulements partiels (3 à 8) de la structure de bobine d'électroaimant, est monté en parallèle avec cette résistance (55).

14. Dispositif selon la revendication 13, caractérisé en ce que la diode (53) et sa résistance série (55) sont disposées dans le courant de gaz d'échappement (zone 9) du fluide de refroidissement.

15. Dispositif selon l'une des revendications 1 à 14, caractérisé en ce que des feuilles de plastique métallisées sont prévues comme éléments chauffants (34 à 43; 54).

FIG 1

FIG 2